# EUROPEAN PATENT APPLICATION

(11) **EP 2 741 175 A2**
(43) Date of publication of application: **11.06.2014**
(21) Application number: 13192634.7
(22) Date of filing: 13.11.2013
(51) Int. Cl.: G06F 3/01, G06F 3/038

(54) **Mobile terminal and controlling method thereof using the user's eyes and voice**

(30) Priority: 06.12.2012 KR 20120141475
(71) Applicant: LG Electronics, Inc., Seoul, 150-721 (KR)
(72) Inventor: Kim, Seunghee, 153-801 Seoul (KR)
(74) Representative: Urner, Peter

(57) **Abstract**

A mobile terminal and controlling method thereof are disclosed, which facilitates the control of the mobile terminal using user's eyes and gesture and which minimizes user's touch inputs for manipulating the mobile terminal. The present invention includes a camera 121, a microphone 122, a display unit 150, and a controller 180 determining a location faced by eyes of a user on the display unit 150, the controller 180, if determining an object displayed on the determined location, performing a function corresponding to at least one of a voice recognized via the microphone 122 and a gesture taken via the camera 121 on the object.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for recognizing user's eyes and gesture and then performing a control in response to the recognized eyes and gesture.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to their degree (e.g., ease) of mobility. Further, the mobile terminals can be further classified into handheld terminals and vehicle mount terminals according to the manner of portability.

There are ongoing efforts to support and increase the functionality of mobile terminals. Such efforts include software and hardware improvements, as well as changes and improvements in the structural components which form the mobile terminal.

Recently, many ongoing efforts are made to research and develop the technology in recognizing user's eyes using a camera of a mobile terminal. So, the demand for a method of controlling a mobile terminal more conveniently in response to recognition of user's eyes and a user's gesture detected by the mobile terminal is rising.

### SUMMARY OF THE INVENTION

Accordingly, embodiments of the present invention are directed to a mobile terminal and controlling method thereof that substantially obviate one or more problems due to limitations and disadvantages of the related art.

One object of the present invention is to provide a mobile terminal and controlling method thereof, by which the control of the mobile terminal can be facilitated using user's eyes and gesture.

Another object of the present invention is to provide a mobile terminal and controlling method thereof, by which the mobile terminal can be conveniently controlled in a manner of minimizing user's touch inputs.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to the present invention may include a camera, a microphone, a display unit, and a controller determining a location faced by eyes of a user on the display unit, the controller, if determining an object displayed on the determined location, performing a function corresponding to at least one of a voice recognized via the microphone and a gesture taken via the camera on the object.

Preferably, the controller displays the object displayed on the location in a manner of being visually identifiable in accordance with a time during which the eyes of the user are maintained on the object.

Preferably, if a plurality of objects are displayed on the location, the controller controls a plurality of the objects to be displayed in a manner of being visually identifiable from each other.

More preferably, if receiving an input of selecting at least one of a plurality of the objects from the microphone, the controller performs the function on the selected object.

Preferably, if the object is determined, the controller controls an indicator to be displayed on the display unit. In this case, the indicator indicates that the function corresponding to the at least one of the voice and the gesture can be performed on the object.

Preferably, the mobile terminal further includes a user input unit and a memory. In this case, when the function corresponding to the at least one of the voice and the gesture is unable to be performed on the object, if at least one of a new voice and a new gesture input is received and a function corresponding to an input received via the user input unit is performed on the object displayed on the display unit, the controller controls the function performed on the object and a history of the received new voice or gesture input to be saved in the memory in a manner of being related to each other.

More preferably, when the function corresponding to the at least one of the voice and the gesture input can be performed on the object, the controller displays a list of the function performed on the object and the history of the received at least one of the new voice and the new gesture input. In this case, the function and the history are saved in the memory.

Preferably, when the function corresponding to the at least one of the voice and the gesture input can be performed on the object, the controller determines a new location faced by the eyes of the user. Moreover, if determining that a different object except the object is displayed on the determined location, the controller performs the function corresponding to the at least one of the voice and the gesture on the object and the different object.

In another aspect of the present invention, a method of controlling a mobile terminal according to the present invention may include the steps of displaying an object on a display unit, determining a location faced by eyes of a user on the display unit, determining the object displayed on the determined location, and performing a function corresponding to at least one of a voice recognized via a microphone and a gesture taken via a camera on the object.

In a further aspect of the present invention, a recording medium according to the present invention may include software loaded thereon, the software including a 1^{st} command for displaying an object on a display unit, a 2^{nd} command for determining a location faced by eyes of a user on the display unit, a 3^{rd} command for determining the object displayed on the determined location, and a 4^{th} command for performing a function corresponding to at least one of a voice recognized via a microphone and a gesture taken via a camera on the object.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:

FIG. 1 is a block diagram of a mobile terminal according to one embodiment of the present invention;

FIG. 2 is a front perspective diagram of a mobile terminal according to one embodiment of the present invention;

FIG. 3 is a diagram for one example of a method of controlling a mobile terminal capable of identifying an object watched by a user by tracking the pupil of the user according to one embodiment of the present invention;

FIG. 4 is a flowchart for a method of controlling a mobile terminal using a function of tracking a user's pupil according to one embodiment of the present invention;

FIG. 5 is a diagram for one example of a screen for recognizing an object displayed on a mobile terminal according to one embodiment of the present invention by user's eyes and controlling the object by a voice;

FIG. 6 is a diagram for one example of a screen for recognizing an object displayed on a mobile terminal according to one embodiment of the present invention by user's eyes and controlling the object by a gesture;

FIG. 7 is a diagram for one example of a method of selecting one of a plurality of objects existing in user eye recognizable region according to one embodiment of the present invention;

FIG. 8 is a diagram for one example of a screen for cancelling a selection of an object selected by user's eyes when the user's eyes move according to one embodiment of the present invention;

FIG. 9 is a diagram for one example of a screen for selecting a plurality of objects in accordance with user's eyes according to one embodiment of the present invention;

FIG. 10 is a diagram for one example of additionally selecting an object by user's eyes after entering a gesture mode according to one embodiment of the present invention;

FIG. 11 is a diagram for one example of a method for cancelling a gesture mode by user's eyes after entering a gesture mode according to one embodiment of the present invention;

FIG. 12 is a diagram for one example of a screen for performing an object related control by recognizing a user eye movement as a gesture according to one embodiment of the present invention;

FIG. 13 is a diagram for one example of a screen for performing a control related to a text displayed when a mobile terminal according to one embodiment of the present invention recognizes a user's gesture;

FIG. 14 is a flowchart for a method of setting up a user's gesture and a control operation related to the user's gesture according to one embodiment of the present invention;

FIG. 15 is a diagram for one example of a method for setting a gesture according to one embodiment of the present invention;

FIG. 16 is a diagram for one example of a method for performing a prescribed operation in a gesture mode of a mobile terminal after a gesture has been saved in association with the prescribed operation according to one embodiment of the present invention; and

FIG. 17 is a diagram for one example of a method for performing an operation in a gesture mode entered after performing a gesture according to one embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

Features of embodiments of the present invention are applicable to various types of terminals. Examples of such terminals include mobile terminals, such as mobile phones, user equipment, smart phones, mobile computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals such as digital TV, desktop computers and so on.

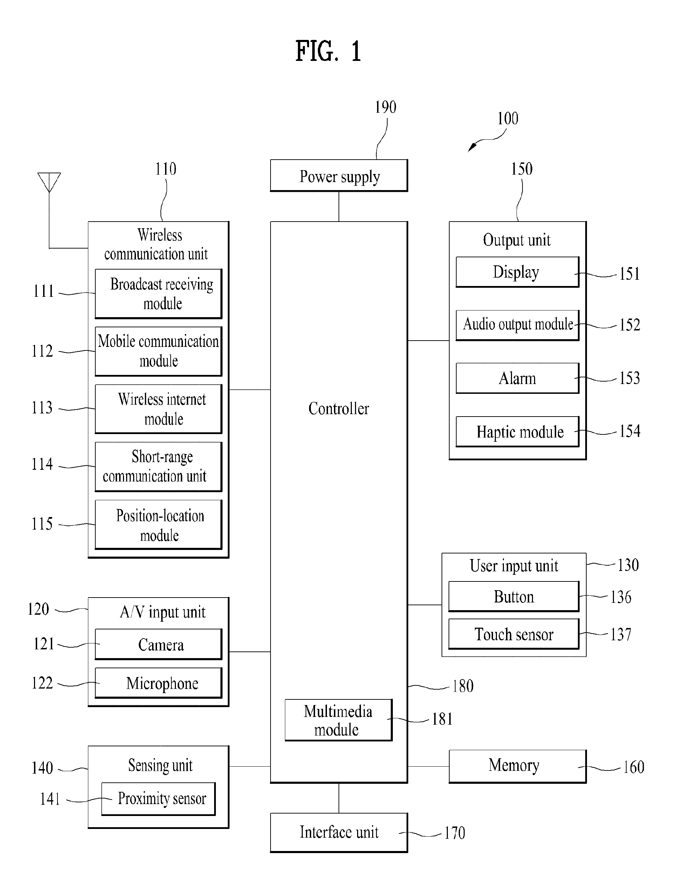

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. More or fewer components may be implemented according to various embodiments.

The wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided in the mobile terminal 100 to facilitate simultaneous reception of at least two broadcast channels or broadcast channel switching.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), Convergence of Broadcasting and Mobile Service(DVB-CBMS), Open Mobile Alliance-BroadCAST(OMA-BCAST), China Multimedia Mobile Broadcasting(CMMB), Mobile Broadcasting Business Management System(MBBMS),, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., base station, external terminal, server, etc.) via a mobile network such as GSM(Global System for Mobile communications), CDMA(Code Division Multiple Access), WCDMA(Wideband CDMA) and so on. Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

Wireless internet access by Wibro, HSPDA, GSM, CDMA, WCDMA, LTE or the like is achieved via a mobile communication network. In this aspect, the wireless internet module 113 configured to perform the wireless internet access via the mobile communication network can be understood as a sort of the mobile communication module 112.

The short-range communication module 114 facilitates relatively short-range communications. Suitable technologies for implementing this module include NFC(Near Field Communication)**,** radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time informations are calculated using three satellites, and errors of the calculated location position and time informations are then amended using another satellite. Besides, the GPS module 115 is able to calculate speed information by continuously calculating a real-time current location.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a button 136 provided to front/rear/lateral side of the mobile terminal 100 and a touch sensor (constant pressure/electrostatic) 137 and may further include a key pad, a dome switch, a jog wheel, a jog switch and the like [not shown in the drawing].

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. By nonlimiting example, such sensing unit 140 include, gyro sensor, accelerate sensor, geomagnetic sensor.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, and a haptic module 154 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touchscreen'), it is able to use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor 141 can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

For clarity and convenience of explanation, an action for enabling the pointer approaching the touchscreen to be recognized as placed on the touchscreen may be named 'proximity touch' and an action of enabling the pointer to actually come into contact with the touchscreen may be named 'contact touch'. And, a position, at which the proximity touch is made to the touchscreen using the pointer, may mean a position of the pointer vertically corresponding to the touchscreen when the pointer makes the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include a Near Field Communication (NFC) Chip, User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

A battery may include a built-in rechargeable battery and may be detachably attached to the terminal body for a charging and the like. A connecting port may be configured as one example of the interface 170 via which an external charger for supplying a power of a battery charging is electrically connected.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

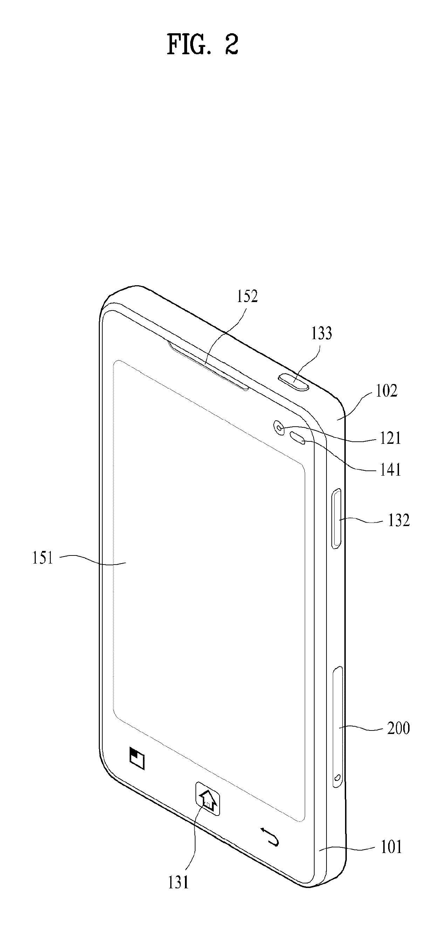

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

Occasionally, electronic components can be mounted on a surface of the rear case 102. The electronic part mounted on the surface of the rear case 102 may include such a detachable part as a battery, a USIM card, a memory card and the like. In doing so, the rear case 102 may further include a backside cover 103 configured to cover the surface of the rear case 102. In particular, the backside cover 103 has a detachable configuration for user's convenience. If the backside cover 103 is detached from the rear case 102, the surface of the rear case 102 is exposed.

Referring to FIG. 2, if the backside cover 103 is attached to the rear case 102, a lateral side of the rear case 102 may be exposed in part. If a size of the backside cover 103 is decreased, a rear side of the rear case 102 may be exposed in part. If the backside cover 103 covers the whole rear side of the rear case 102, it may include an opening 103' configured to expose a camera 121' or an audio output unit 152' externally.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

<User Eye Tracking>

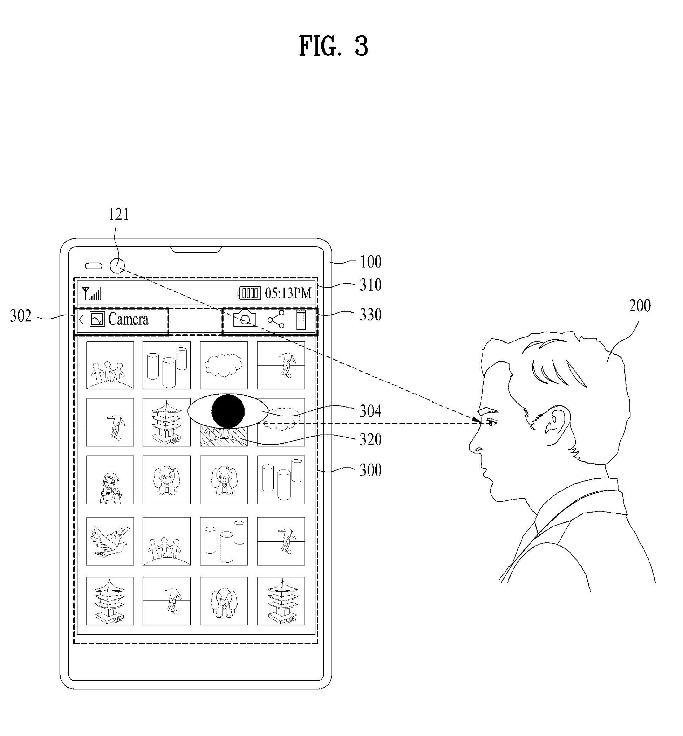

In a mobile terminal controlling method according to one embodiment of the present invention, proposed is a function corresponding to user's gesture or voice is performed on an object recognized by user's eyes. To this end, a method of determining a location on the display unit 151, which is faced by user's eyes, and then determining an object displayed at the determined location is described with reference to FIG. 3 as follows.

FIG. 3 is a diagram for one example of a method of controlling a mobile terminal 100 capable of identifying an object watched by a user 200 by tracking the pupil of the user 200 according to one embodiment of the present invention. In the following description with reference to FIG. 3, assume that an image in a camera folder of the memory 160 is displayed on the display unit 151.

Referring to FIG. 3, an indicator region 310 is displayed on a top end part of the display unit 151. And, a plurality of objects 300 corresponding to an image file saved in the camera folder may displayed as a full screen on the rest of the region except the indicator region 310.

In this case, the indicator region 310 means the area that indicates various operating states of the mobile terminal 100 schematically. In particular, the operating states of the mobile terminal 100 includes reception sensitivity of a radio signal, a presence or non-presence of reception of new messages, activation or deactivation of a voice recognition mode or a gesture mode, a remaining battery level and the like.

An image file saved in the memory 160 may be displayed as an object 300 in a preview form on the display unit 151. In this case, if a plurality of image files exist, a plurality of objects 300 corresponding to a plurality of the image files may be displayed on the display unit 151.

And, an indicator 3o2 indicating a folder, in which a displayed image file is saved, and a menu 330 for controlling an object may be additionally displayed on the display unit 151. For instance, when a gallery screen for displaying an image file is displayed, such an object as camera activation, image file sharing, image file deletion and the like may be displayed on the object control menu 330.

In doing so, the controller 180 activates the camera 121 provided to a front side of the mobile terminal 100 and may be then able to determine a region 320, which is faced by the pupil of a user face, via a face image of the user 200 taken via the camera 121.

And, the controller 180 may be able to determine an object 304, which is located in the region watched by the user 200, among the objects displayed on the display unit 151.

Thereafter, the controller 180 monitors the eye movement of the user 200 by monitoring the movements of the pupil and face of the user 200 from the image taken via the camera 121.

<Eye Tracking and Gesture Mode Entering Method>

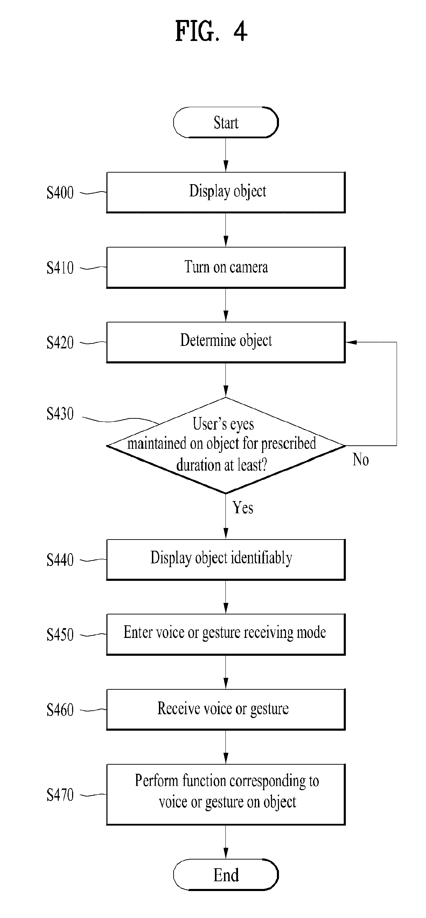

In the following description, a method of controlling the mobile terminal 100, which selects an object by tracking eyes of a user 200 and receives an input of the user, is explained with reference to FIG. 4.

FIG. 4 is a flowchart for a method of controlling a mobile terminal using a function of tracking a user's pupil according to one embodiment of the present invention.

Referring to FIG. 4, the controller 180 displays an object on the display unit 151 [S400]. In doing so, the object displayed on the display unit 151 may have such a form as an icon, a widget, a text, an image and a combination thereof. The object may have a form resulting from combining a graphic image of a prescribed format and a text together. The object may include an execute file of an application program, a data file, a folder containing the data file or the like and may correspond to a function of shortcut to them. And, the object may have a form resulting from modifying a graphic image and a text.

The object may be displayed on a background screen, a lock screen, a call screen or an active application screen.

Subsequently, the controller 180 activates the camera 121 [S410]. For instance, in case that a plurality of objects are displayed on the display unit 151, the controller 180 activates the camera 121 and is then able to take a face image of a user 200.

For another instance, the controller 180 may activate the camera 121 in response to a hot-key input, a selection of a camera activating object, a gesture input or the like. In particular, if the user 200 touches a screen of the mobile terminal 100 or applies an input to cancel a locked state of the mobile terminal 100, the controller 180 may activate the camera 121.

The controller 180 recognizes the pupil in the face image of the user 200 taken via the camera 121, determines a location faced by the eyes of the user 200 on the display unit 151, and then determines the object displayed on the determined location [S420]. Since the pupil recognition process or the eye tracking process is the matter apparent to those skilled in the art, its details shall be omitted from the present specification.

The controller 180 determines whether the eyes of the user 200 are maintained at the location of the display unit 151, on which the determined object is displayed, for prescribed duration at least [S430]. For instance, if a webpage is displayed on the display unit 151, the controller 180 is able to determine whether the user 200 is watching the object displayed location on the displayed webpage during at least 3 seconds.

For another instance, if the screen is scrolled, the eyes of the user 200 may move in a manner of following the object displayed on the screen. If so, the controller 180 tracks the eyes of the user 200 when the screen is being scrolled. Hence, the controller 180 is able to determine whether the eyes of the user 200 are maintained at the object for the prescribed duration at least.

If the eyes of the user 200 are maintained at a prescribed object for the prescribed duration at least, the controller 180 controls the object, at which the eyes of the user 200 are maintained, to be visually discriminated [S440]. In particular, a prescribed visual effect such as a shape change, a color change and the like is given to the object to indicate whether the eyes of the user 200 are maintained at the object.

For instance, the controller 180 may control a color to be overlaid on the object, at which the eyes of the user 200 are maintained, in order to discriminate the object to be discriminated from other objects. In doing so, the object, at which the eyes of the user 200 are maintained, is preferably overlaid with the color having a high visual discriminating power.

For another instance, the controller 180 may be able to improve readability by only increasing brightness of the object at which the eyes of the user 200 are maintained. Moreover, the controller 180 may be able to relatively improve the eye maintained object by decreasing brightness of the rest of regions not watched by the user 200, thereby reducing battery power consumption. Alternatively, the controller 180 may control the region, at which the eyes of the user 200 are maintained, to be displayed in a manner of being enlarged.

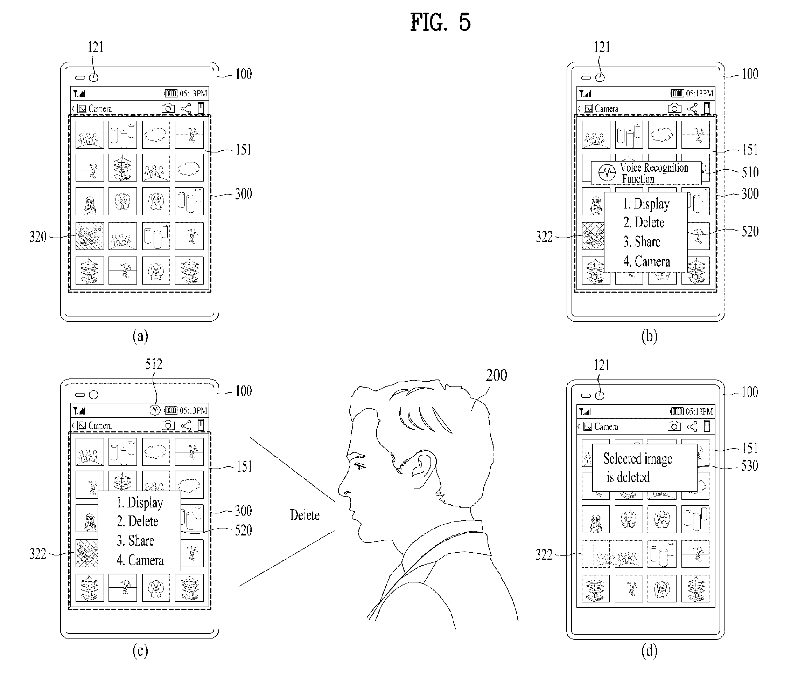

The controller 180 detects the time, during which the eyes of the user 200 are maintained, as a plurality of intervals including a 1^{st} interval, a 2^{nd} interval and the like. If the time, during which the eyes of the user 200 maintained at the object, corresponds to the 1^{st} interval, the controller 180 may add a 1^{st} visual effect of the object. If the time, during which the eyes of the user 200 maintained at the object, corresponds to the 2^{nd} interval, the controller 180 may add a 2^{nd} visual effect of the object. This shall be described with reference to FIG. 5 later.

Subsequently, the controller 180 enters a mode of performing a function, which corresponds to at least one of a voice recognized via the microphone 122 and a gesture taken via the camera 121, on the determined object [S450].

And, the controller 180 may be able to output an effect to indicate that the mode of performing the function, which corresponds to the at least one of the voice recognized via the microphone 122 and the gesture taken via the camera 121, on the determined object has been entered.

For instance, using at least one of the audio output module 152, the alarm unit 153, the haptic module 154 and the like, the controller 180 may be able to indicate that the mode of performing the function, which corresponds to the at least one of the voice recognized via the microphone 122 and the gesture taken via the camera 121, on the determined object has been entered.

Thereafter, the microphone 122 or the camera 121 receives a voice or gesture of the user 200 [S460] and then performs a function corresponding to the received voice or gesture on the determined object [S470].

For example, the microphone 122 receives the voice of the user 200 and the controller 180 is able to perform the function corresponding to the received voice on the determined object.

For another example, if such a shape as a hand of the user and the like exists in the image taken via the camera 121, the controller 180 may perform the function corresponding to the shape on the determined object.

The function performed on the object may include a function of displaying information related to the object, a function of deleting the information related to the object, a function of transmitting information to an external server or another mobile terminal 100, a function of searching for information, or the like, by which the present example may be non-limited.

In the following description, a method of selecting an object and performing a related control on the selected object via a voice of a user 200 is explained with reference to FIG. 5. According to the following description, the object, which is determined by the former step S420 of determining the location faced by the eyes of the user 200 on the display unit 151 and determining the object displayed at the determined location, is assumed as the object recognized by the eyes of the user 200.

FIG. 5 is a diagram for one example of a screen for recognizing an object 300 displayed on a mobile terminal 100 according to one embodiment of the present invention by the eyes of a user 200 and controlling the object by a voice of the user 200.

Referring to FIG. 5 (a), a plurality of objects 300 may be displayed on the display unit 151.

In response to a time during which the eyes of the user 200 are maintained, the controller 180 may control an object 320, which is recognized by the eyes of the user 200, to be identifiably displayed. For instance, if the time, during which the user 200 stares at the object 320, exceeds 1 second, the controller 180 may control the object 320 to be displayed in a manner that the whole object 320 or a portion of the object 320 is overlaid with a 1^{st} color.

In doing so, if the time, during which the eyes of the user 200 are maintained on the object 320, is equal to or greater than 1 second and smaller than 3 seconds, it is assumed as a 1^{st} interval. If the time, during which the eyes of the user 200 are maintained, corresponds to the 1^{st} interval, the controller 180 may control the 1^{st} color to be overlaid on the eye maintained object 320.

Referring to FIG. 5 (b), if the user 200 maintains the eyes on the object 322 for prescribed duration at least, the controller 180 may be able to enter a mode of receiving an input of the user 200 to perform a control on the object 322 on which the eyes are maintained by the user. For instance, the controller 180 may enter a mode of receiving a voice command of the user 200.

In doing so, the controller r180 may control the object 322 to be displayed in a manner of being overlaid with a 2^{nd} color. For instance, if the time, during which the user 200 stares at the object 322, exceeds 3 seconds, the controller 180 may control the object 322 to be displayed in a manner that the whole object 322 or a portion of the object 322 is overlaid with the 2^{nd} color.

If the time, during which the eyes of the user 200 are maintained on the object 322, is equal to or greater than 3 seconds, it is assumed as 2^{nd} interval. If the time, during which the eyes of the user 200 are maintained, corresponds to the 2^{nd} interval, the controller 180 may control the 2^{nd} color to be overlaid on the eye maintained object 322.

Moreover, an indicator 510 (or a guide text) indicating that a reception of a voice input of the user 200 is possible and a menu 520 of voice recognizable commands may be further displayed on the display unit 151.

Referring to FIG. 5 (c), the controller 180 may be able to receive an input for controlling the object 322 from the user 200 via the microphone 122. For instance, the user 200 is able to input a voice command for deleting the color overlaid object from the menu 520 displayed on the display unit 151 via the microphone 122. If so, the controller 180 is able to perform the control on the selected object 322.

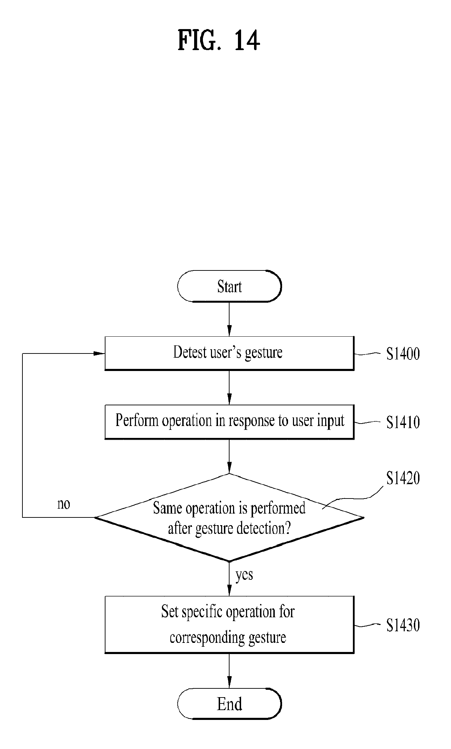

Meanwhile, although a command other than the commands displayed on the menu 520 is received, if the received command matches a command saved in the memory 160, the controller 180 may perform a control related to the received command. A method of saving commands in the memory 160 shall be described with reference to FIG. 14 later.

Referring to FIG. 5 (d), if the voice command is inputted by the user 200, the controller 180 may perform the command recognized via the voice. For instance, if the command for deleting an object is inputted, the controller 180 deletes information corresponding to the selectee object from the memory 160 and may not further display the deleted object on the display unit 151.

And, an indicator 530 indicating that the control on the object has been completed may be displayed on the display unit 151.

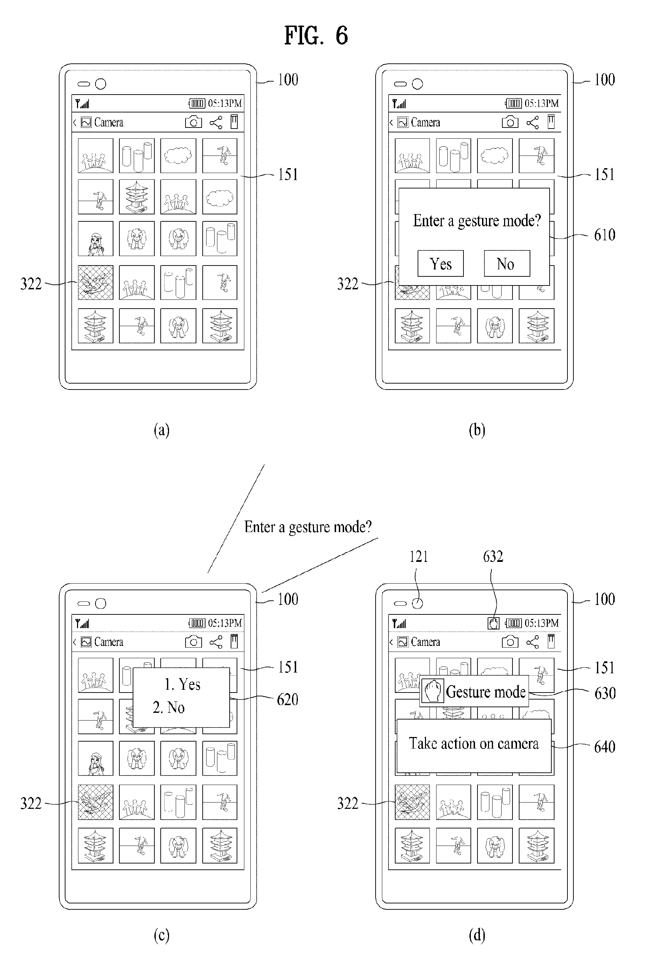

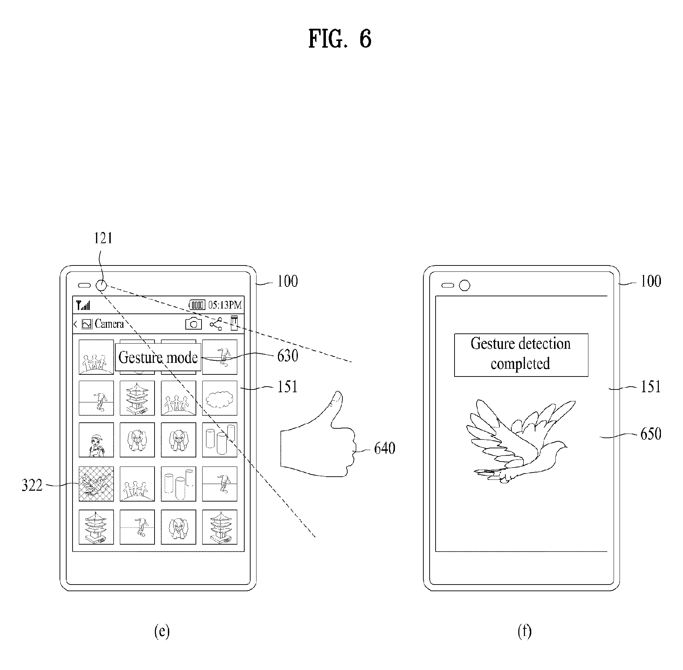

In the following description, a method of selecting an object and performing a control related to the object is explained with reference to FIG. 6.

FIG. 6 is a diagram for one example of a screen for recognizing an object displayed on a mobile terminal 100 according to one embodiment of the present invention by the eyes of a user 200 and controlling the object by a gesture.

Referring to FIG. 6 (a), the controller 180 may control an object 322, on which the user 200 maintains his eyes for prescribed duration at least, to be displayed in a manner of being visually identifiable from a plurality of objects 300 displayed on the display unit 151.

If so, the controller 180 may control a window 610, which is provided to query whether to enter a mode of receiving an input of the user 200 to perform a control on the eye maintained object 322, to be displayed on the display unit 151 [FIG. 6 (b)] or queries the same using a voice via the audio output module 152 [FIG. 6 (c)]. In doing so, a list 620 of voice recognizable commands may be further displayed on the display unit 151.

Subsequently, referring to FIG. 6 (d), the controller 180 enters the mode (hereinafter a gesture mode) of receiving an input of the user 200 via a user's gesture taken via the camera 121 from the user 200 and is then able to further display an indicator 632 (and/or a guide text 630) indicating that the reception of the gesture input of the user 200 is possible and a list (not shown in the drawing) of commands for inputting gestures of the user 200 on the display unit 151.

In the gesture mode, the camera 121 is able to receive the gesture input of the user 200. The controller 180 recognizes a shape taken via the camera 121 and is then able to perform a control related to the recognized shape.

For instance, if the user 200 takes a shape 640 of a thumb-up hand toward the camera 121 [FIG. 6 (e)], the controller 180 is able to display an information 650 on the object 322 by recognizing the hand shape 640 taken via the camera 121 and then performing a control related to the recognized hand shape [FIG. 6 (f)]. In doing so, an indicator indicating that the control related to the recognition of the gesture of the user 200 has been performed may be further displayed on the display unit 151.

Therefore, the object 300 displayed on the mobile terminal 100 is recognized via the eyes of the user 200 and the control related to the recognized object 322 can be performed via the voice input or the gesture input.

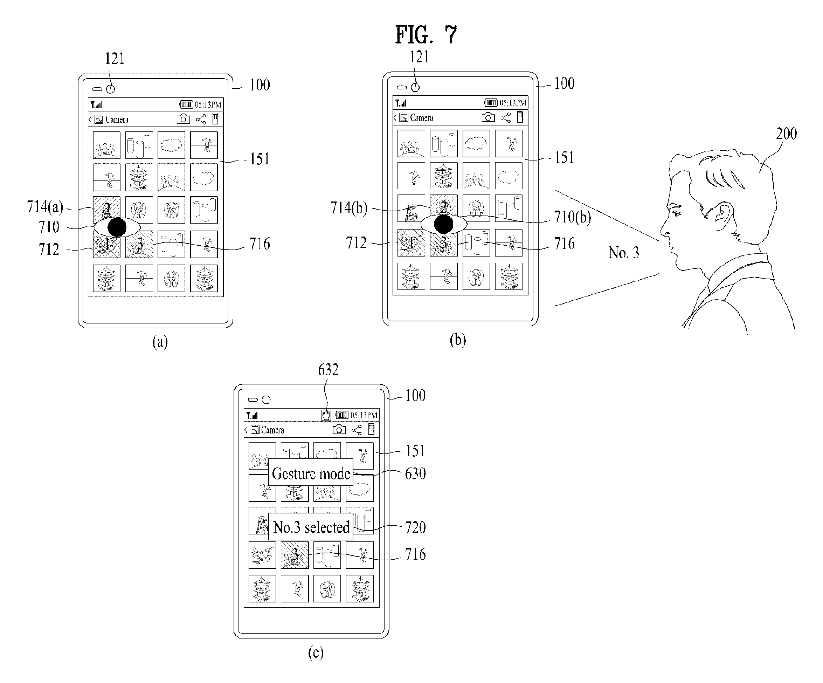

In the following description, in case that a plurality of objects are recognizable via the eyes of the user 200, a method of displaying each of the objects identifiably is explained with reference to FIG. 7.

FIG. 7 is a diagram for one example of a method of selecting one of a plurality of objects existing in user eye recognizable region according to one embodiment of the present invention.

Referring to FIG. 7 (a), when the eyes of the user 200 are recognized in a region 710 (a) (hereinafter named a 1^{st} region), the controller 180 may control a plurality of objects 712, 714 (a) and 716, which are adjacent to the 1^{st} region 710 (a), to be displayed in a manner of being visually discriminated from each other.

For instance, in case that each of the 1^{st} object 712, the 2^{nd} object 714 (a) and the 3^{rd} object 716 are situated adjacent to the 1^{st} region, the controller 180 may control the 1^{st} object 712, the 2^{nd} object 714 (a) and the 3^{rd} object 716 to be displayed in a manner of being overlaid with red, green and yellow, respectively. And, the controller 180 may control the 1^{st} object 712, the 2^{nd} object 714 (a) and the 3^{rd} object 716 to be displayed in a manner of being provided with numerals or characters to be selectable by voice recognition, respectively.

Referring to FIG. 7 (b), if the eyes of the user 200 move to a 2^{nd} region 710 (b) from the 1^{st} region 710 (a), the controller 180 may control a plurality of objects 712, 714 (b) and 716 adjacent to the 2^{nd} region 710 (b) to be displayed in a manner of being discriminated from each other.

In particular, while the objects 712, 714 (a) and 716 adjacent to the 1^{st} region 710 (a) are identifiably displayed in a manner of being overlaid with colors and being provided with characters, if the eyes of the user 200 move to the 2^{nd} region 710 (b) from the 1^{st} region 710 (a), the objects 712, 714 (b) and 716 adjacent to the 2^{nd} region 710 (b) are displayed in a manner of being overlaid with colors and being provided with characters. In doing so, since the 1^{st} object 712 and the 3^{rd} object 716 are adjacent to the 1^{st} region 710 (a) and the 2^{nd} region 710 (b), they are displayed without changing the overlaid color and the characters. And, the same color and character given to the 2^{nd} object 714 (a) may be given to the 4^{th} object 714 (b).

The microphone 122 or the camera 121 may be able to receive an input of the user 200 to select one of the objects 712, 714 (b) and 716 displayed in a manner of being visually identifiable from each other. For instance, the user 200 may be able to perform an input of selecting the 3^{rd} object 716 by voice via the microphone 122. For another instance, the user 200 may be able to select an object by inputting a shape 640 of a hand, of which fingers amounting to an object number are erected toward the camera 121.

Referring to FIG. 7 (c), the controller 180 controls an indicator 632, which indicates the state of receiving the input for performing the control on the selected object from the user 200, to be displayed on the screen and is then able to cancel the visual effect on the rest of the objects except the selected object.

In particular, if it is not clear that the eyes of the user face toward which one of the objects, the controller 180 is able to control a plurality of the objects, which are situated at the location faced by the eyes of the user, to be displayed in a manner of being visually identifiable from each other. Through this, the user 200 is able to easily select one of a plurality of objects adjacent to the region faced by the user 200.

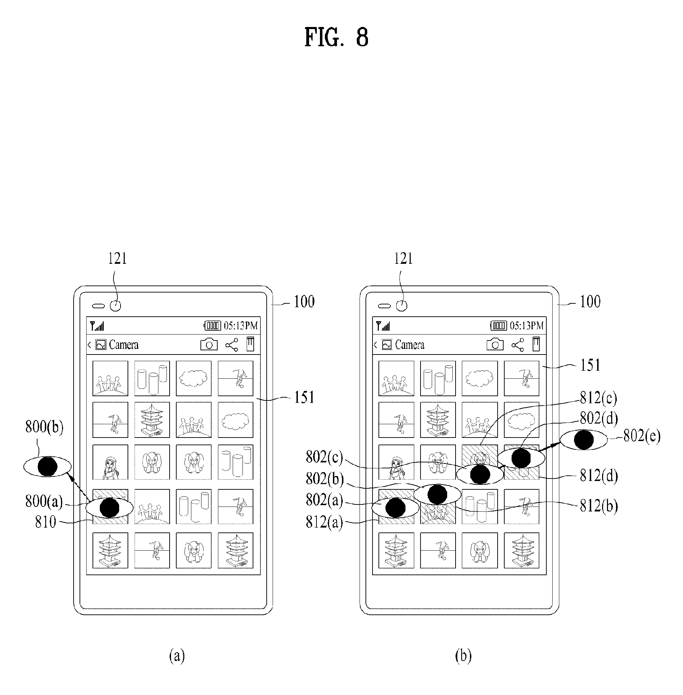

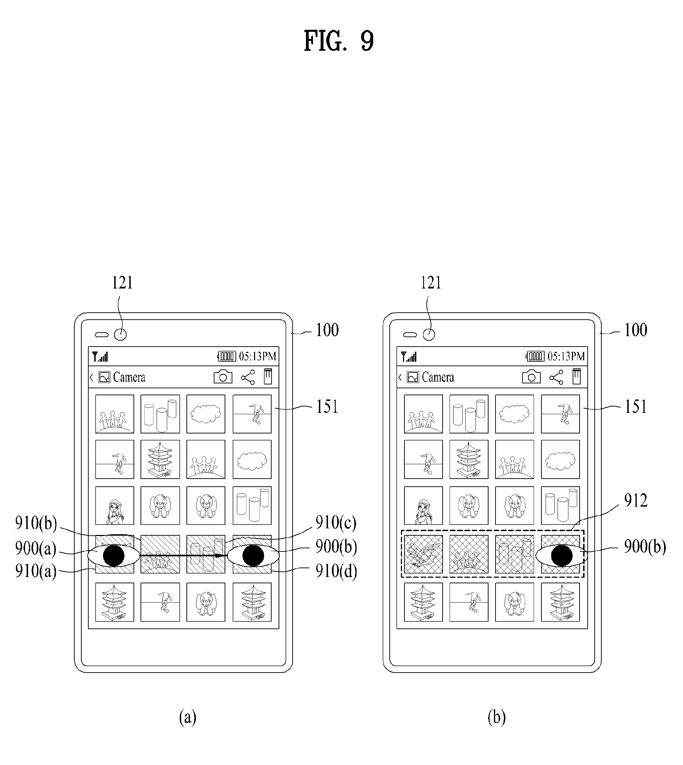

In the following description, a method of selecting an object in response to a movement of the eyes of the user 200 before entering a gesture mode and a method of canceling the selection of the object are explained with reference to FIG. 8 and FIG. 9.

FIG. 8 is a diagram for one example of a screen for cancelling a selection of an object selected by the eyes of a user 200 when the eyes of the user 200 move according to one embodiment of the present invention. And, FIG. 9 is a diagram for one example of a screen for selecting a plurality of objects in accordance with the eyes of the user 200 according to one embodiment of the present invention.

Referring to FIG. 8 (a), while an object 810 recognized by the eyes of the user 200 is being displayed in a manner of being overlaid with a color, the eyes 800 (a) of the user 200 move out to an outside 800 (b) of a screen displayed on the display unit 151, the controller 180 may stop the color overlay on the object 810 watched by the user 200.

For instance, when the object 180 is overlaid with the 1^{st} color, if the time, during which the eyes of the user 200 are maintained, corresponds to a 1^{st} interval, the display of the overlaid color may be stopped as soon as the eyes of the user 200 move to the screen outside 800 (b).

Referring to FIG. 8 (b), if the eyes of the user 200 move to a screen outside via other objects 812 (a), 812 (b), 812 (c) and 812 (d), the controller 180 may control the objects 812 (a), 812 (b), 812 (c) and 812 (d), which are situated on the eye passing path, to be displayed in a manner of being visually identifiable from each other.

For instance, while the 1^{st} object 812 (a) is watched, if the eyes of the user 200 move to a location B 802 (b) from a location A 802 (a), the 1^{st} object 812 (a) can be displayed in an original state as soon as the 2^{nd} object 812 (b) located on the path is identifiably displayed. If the eyes of the user 200 move to a location C 802 (c) and a location D 802 (d) in order, the 3^{rd} object 812 (c) and the 4^{th} object 812 (d) can be displayed in a manner of being sequentially identifiable.

Referring to FIG. 9 (a), after an object 910 (a) has been overlaid with a 1^{st} color, if the eyes of the user 200 move to 900 (b) from 900 (a), the controller 180 may control other objects 910 (b), 910 (c) and 910 (d), which are situated on the moving path, to be displayed in a manner of being overlaid with the 1^{st} color.

For instance, when the time, during which the eyes of the user 200 are maintained on the 1^{st} object 910 (a), corresponds to a 1^{st} interval, if the eyes of the user 200 move to the 2^{nd} object 910 (b), the 3^{rd} object 910 (c) and the 4^{th} object 910 (d) in sequential order, the controller 100 may control the 1^{st} object 910 (a), the 2^{nd} object 910 (b), the 3^{rd} object 910 (c) and the 4^{th} object 910 (d) to be displayed in a manner of being simultaneously overlaid with the 1^{st} color.

Referring to FIG. 9 (b), if the time, during which the eyes of the user 200 are maintained on the 4^{th} object 910 (d), corresponds to a 2^{nd} interval, the controller 180 may be able to enter a mode of receiving an input of the user 200 to perform a control on the object on which the eyes of the user 200 have been maintained. In doing so, the controller 180 may control a 2^{nd} color to be overlaid on the objects 910 (a), 910 (b), 910 (c) and 910 (d) on which the eyes of the user 200 have been maintained.

For instance, the 2^{nd} color is overlaid on the 1^{st} object 910 (a), the 2^{nd} object 910 (b), the 3^{rd} object 910 (c) and the 4^{th} object 910 (d) and the controller 180 may be able to enter a voice recognition or gesture mode for receiving an input to perform the control on the 1^{st} object 910 (a), the 2^{nd} object 910 (b), the 3^{rd} object 910 (c) and the 4^{th} object 910 (d).

In particular, if a color of a watched object changes into the 1^{st} color, the user 200 may be able to select several objects by watching another object. And, the user 20 is able to command the mobile terminal 100 to perform the control on the selected objects using a gesture or voice.

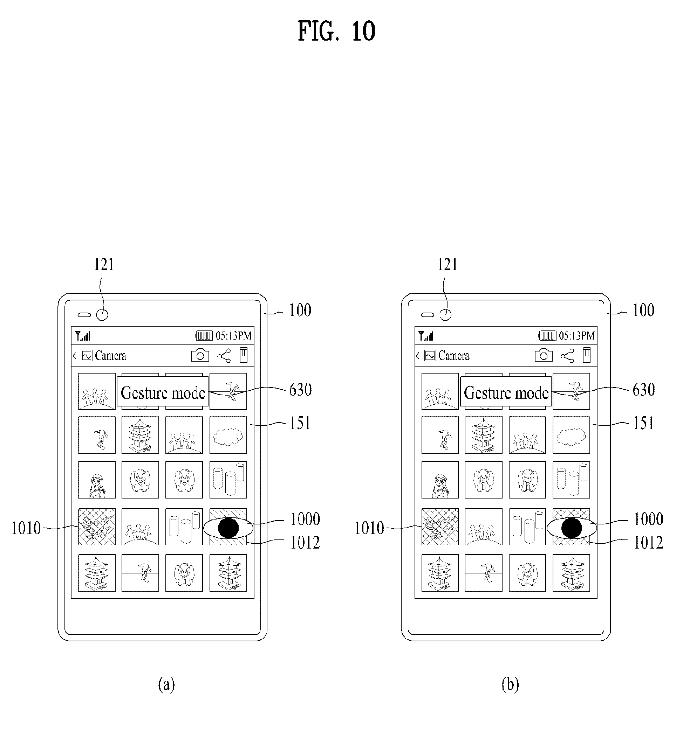

In the following description, a method of selecting an object after entering a gesture mode and a method of canceling the gesture mode are explained with reference to FIG. 10.

FIG. 10 is a diagram for one example of additionally selecting an object by the eyes of the user 200 after entering a gesture mode according to one embodiment of the present invention.

Referring to FIG. 10 (a), as a 1^{st} object 101 is selected, if a gesture mode is entered, the user 200 may be able to select a 2^{nd} object 1012 additionally.

In the gesture mode, if the user 200 maintains the eyes of the user 200 on the 2^{nd} object 1012 for prescribed duration at least, the controller 180 may control the object 1012, on which the eyes of the user 200 are maintained, to be displayed in a manner of being visually discriminated.

For instance, if the user watches the 2^{nd} object 1012 during the time of the 1^{st} interval, the controller 180 may control the 2^{nd} object 1012 to be overlaid with a 1^{st} color. If the user 200 watches the 2^{nd} object 1012 during the time of a 2^{nd} interval, the controller 180 controls the 2^{nd} object 1012 to be overlaid with a 2^{nd} color and is able to perform the control on the 1^{st} object 1010 and the 2^{nd} object 1012 using a gesture or voice input.

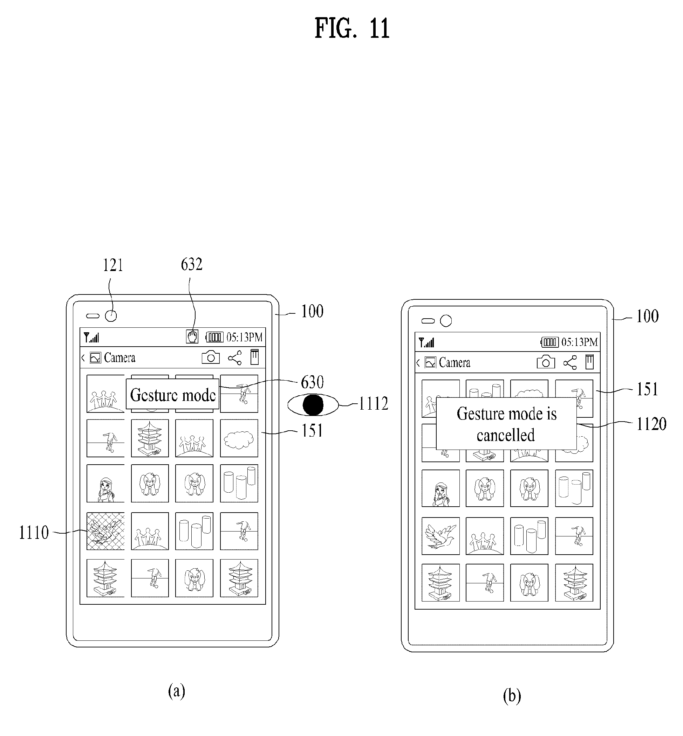

FIG. 11 is a diagram for one example of a method for cancelling a gesture mode by the eyes of the user 200 after entering a gesture mode according to one embodiment of the present invention.

Referring to FIG. 11 (a), the controller 180 may be able to enter a gesture mode to perform a control related to an object 1110 on which the eyes of the user 200 are maintained.

If the eyes of the user 200 move to an outside 1112 of a screen displayed on the display unit 151, the controller 180 may be able to cancel the gesture mode.

Referring to FIG. 11 (b), if the gesture mode is cancelled, the controller 180 may stop the color overlay of the object 1110 watched by the user 200. And, the controller 180 is able to output a text, which indicates that the gesture mode has been cancelled, to the display unit 151.

Although a plurality of objects are selected by the user 200, if the eyes of the user 200 move to the screen outside 1112, the gesture mode can be cancelled.

Besides, in case that the eyes of the user 200 are maintained on a gesture mode cancelling icon (not shown in the drawing) displayed on the screen for prescribed duration at least, the controller 180 may be able to cancel the gesture mode.

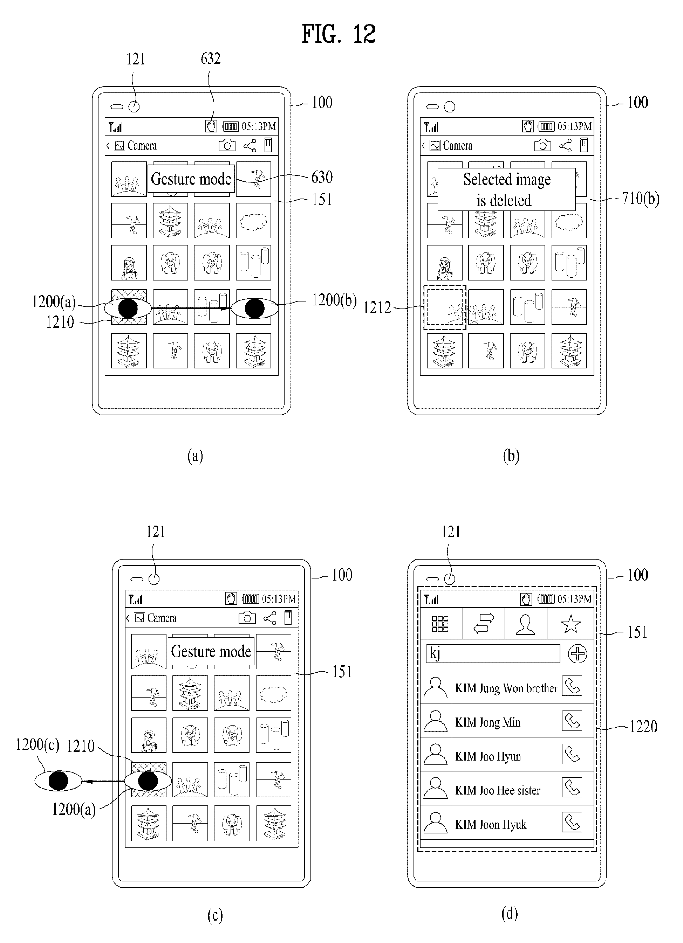

In the following description, a method of recognizing the eyes of the user 200 and receiving a gesture input in a gesture mode is explained with reference to FIG. 12.

FIG. 12 is a diagram for one example of a screen for performing an object related control by recognizing a movement of the eyes of the user 200 as a gesture according to one embodiment of the present invention.

Referring to FIG. 12 (a), if an object 1210 is selected, the controller 180 enters a gesture mode. After the gesture mode has been entered, the controller 180 determines the movement of the eyes of the user 200 as a gesture and the then able to perform a function corresponding to the determined gesture on the selected object 1210. In doing so, the gesture of the movement of the eyes of the user 200 and the function to be performed on the object may be saved in the memory 160 in a manner of corresponding to each other.

For instance, if the eyes of the user 200 move from 1200 (a) to 1200 (b) in a right landscape direction, the controller 180 may be able to perform a deletion function, which corresponds to the gesture of moving the eyes of the user 200 in the right landscape direction, on the selected object 1212. And, referring to FIG. 12 (b), the controller 180 may be able to further display a text 1214 indicating that the object is deleted.

For another instance, referring to FIG. 12 (c), the controller 180 may receive an input of a gesture of moving the eyes of the user 200 from 1200 (a) to 1200 (c) in a left landscape direction. In doing so, even if the eyes of the user 200 gets out of the display unit 151, the camera 121 may be able recognize the eyes of the user 200.

The controller 180 may be able to perform a sharing function, which corresponds to a gesture of moving the eyes of the user 200 in the left landscape direction, on the selected object 1212. If so, referring to FIG. 12 (d), the controller 180 may control a contact list 1220, which is provided to share the selected object 1210, to be displayed on the display unit 151.

Besides, the controller 180 may recognize the movement of the eyes of the user 200 as a gesture and is then able to perform a function corresponding to each gesture on a selected object. In this case, the function corresponding to each gesture may be non-limited by the deletion and sharing functions mentioned in the above description.

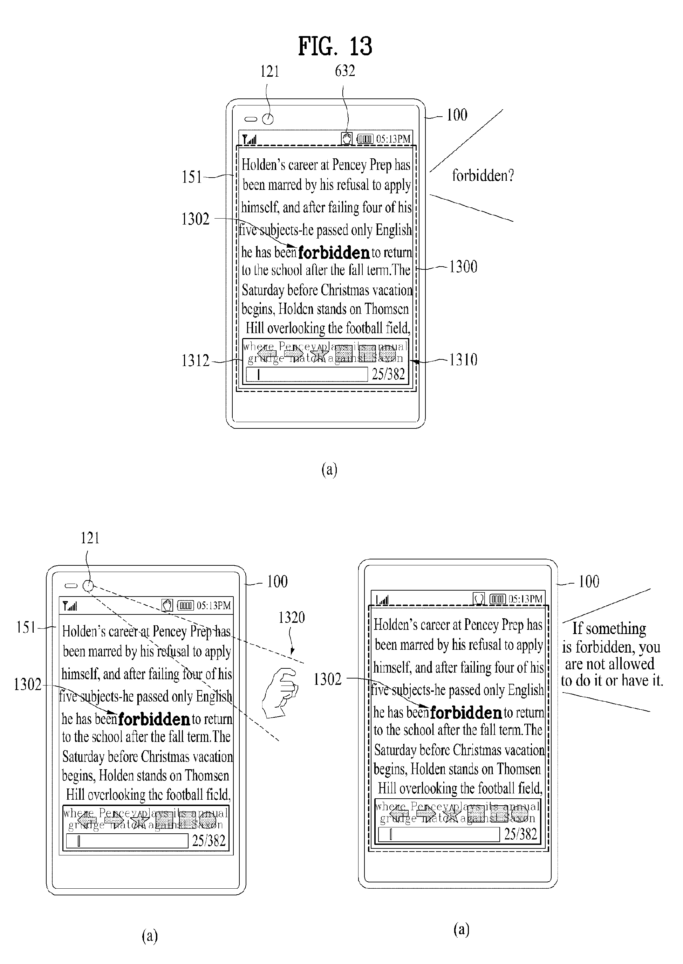

In the following description, when an e-book is displayed on the display unit 151, a method of selecting a displayed text by a recognition of the eyes and performing a control related to the selected text by a gesture of the user 200 is explained with reference to FIG. 13.

FIG. 13 is a diagram for one example of a screen for performing a control related to a text displayed when a mobile terminal 100 according to one embodiment of the present invention recognizes a gesture of the user 200.

Referring to FIG. 13 (a), the mobile terminal 100 may be able to display such a text related content as an e-book 1300 and the like. In doing so, the controller 180 may also display a control menu 1310 to perform such a control related to the e-book 1300 as 'enlarge', 'reduce', previous', 'next', 'view list', 'view full screen' and the like together with the text related content. And, the controller 180 may be able to display a progress bar 1312 indicating a location of a currently displayed page among the entire pages of the e-book 1300.

If the user 200 maintains the eyes of the user 200 on the text displayed on the e-book 1300 for prescribed duration at least, the controller 180 may control the text 1302, on which the eyes of the user 200 are maintained, to be displayed in a manner of being visually discriminated. For instance, the controller 180 controls a color of the text 'forbidden' 1302 to be changed in a manner of being identifiable from the rest of the texts and also controls the text 'forbidden' 1302 to be represented thicker than the rest of the texts.

In this case, the controller 180 reads the text 1302 with sound to inform the user 200 that the text 1302 is selected. And, the controller 180 is able to enter a gesture mode.

Referring to FIG. 13 (b), the user 200 may be able to take a gesture on the camera 121. If the gesture of the user 200 is recognized via the camera 121, the controller 180 is able to perform a control, which is related to the object 1302 and corresponds to the recognized gesture.

For instance, if a control command corresponding to a hand shape 1320 of the user 200 recognized via the camera 121 includes a command for searching for the meaning of the selected text 1302, the controller 180 may be able to search the memory 160 or an external server for the meaning of the selected text 1302.

If so, referring to FIG. 13 (c), the controller 180 may be able to output the found meaning of the text 1302 as voice via the audio output module 152.

In the following description, a method of detecting a repeated gesture of the user 200 and performing a control related to the repeated gesture is explained with reference to FIG. 14.

FIG. 14 is a flowchart for a method of setting up a user's gesture and a control operation related to the user's gesture according to one embodiment of the present invention.

Referring to FIG. 14, the controller 180 detects a user's gesture taken via the camera 121 [S1400].

For instance, the controller 180 activates the camera 121 and is then able to detect a user's gesture taken via the camera 121. For another instance, the controller 180 activates the sensing unit 140 and is then able to detect a user's gesture by an operation of the sensing unit 140. For a further instance, the controller 180 may be able to detect a gesture in response to one of a trace of a user's pointer input to the display unit, the number of the user's pointer inputs, a prescribed duration of the pointer input, and a combination thereof.

After the gesture has been detected, the controller 180 performs a prescribed operation in response to the user's input [S1410]. If the same gesture is detected, the controller 180 determines whether the same operation is performed by the user's input after detection of the gesture [S1420].

For instance, the user performs an action of holding and shaking the mobile terminal and is then able to delete all texts inputted to a text input window displayed on the display unit. A gesture of holding and shaking the mobile terminal and an action of deleting all texts inputted to the text input window may be saved in the memory 160 in a manner of being related to each other.

Subsequently, after the gesture of holding and shaking the mobile terminal 100, if the action of deleting all of the texts inputted to the text input window by user's inputs is repeatedly performed, the controller 180 sets up an operation of deleting all of the texts inputted to the text input window for the gesture of holding and shaking the mobile terminal 100 [S1430].

In particular, after the gesture has been detected, if a prescribed action is repeatedly performed by the user, the controller 180 may control the detected gesture and the prescribed action to be saved in the memory 160 in a manner of being matched with each other.

Hence, if the gesture saved in the memory 160 is detected, the controller 180 performs the operation saved in a manner of being matched with the corresponding gesture or may control an indication window, which queries whether to perform the operation, to be displayed on the display unit.

For instance, if the user takes an action of holding and shaking the mobile terminal, the controller displays an indication window for querying whether to delete all of the texts inputted to the text input window or may be able to delete all of the inputted texts.

The step S1400 of detecting the gesture of the user may include the step of performing a 1^{st} operation performed by the user or the controller. The step S1410 for the controller to perform a prescribed operation in response to a user's input after detecting the gesture may include the step of performing a 2^{nd} operation after performing the 1^{st} operation.

And, the step S1420 of determining whether the same operation is performed in response to a user's input after detecting the gesture may include the step of determining whether the 1^{st} operation and the 2^{nd} operation are performed sequentially and repeatedly.

In particular, after the 1^{st} operation has been performed [S1400], if the 2^{nd} operation is performed [S1410], the controller determines whether the 1^{st} operation and the 2^{nd} operation are repeatedly performed [S1420]. The controller controls the 1^{st} operation and the 2^{nd} operation to be saved in a manner of being related to each other [S1430]. Thereafter, when the 1^{st} operation is performed, the controller may query whether to perform the 2^{nd} operation or may perform the 2^{nd} operation automatically.

For instance, after information of an object selected by a user has been displayed, if an operation of deleting the information displayed object is repeatedly performed in accordance with a user's input in a manner of being repeated more than the prescribed number of times, the controller may control an object information display operation in response to a user's selection and a deleting operation after the object information display to be saved in a manner of being related to each other. Thereafter, if the information of the object selected by the user is displayed, the controller queries whether to delete the information displayed object or may perform the operation of deleting the information display completed object.

For another instance, when a user reads an e-book using the mobile terminal, a 1^{st} page of the e-book may be displayed on the display unit of the mobile terminal. After a prescribed time has expired after displaying the 1^{st} page, if an input for displaying a 2^{nd} page of the e-book is received, the controller may control the 2^{nd} page to be displayed on the display unit.

In particular, after a prescribed expires after displaying a random page, if an input for displaying a page next to the random page is repeatedly received, the controller may control an operation of expiration of a prescribed time after displaying a page and an operation of displaying a page next to the page to be saved in a manner of being related to each other. If the prescribed time expires after displaying the page, the controller may query whether to automatically display a page next to the currently displayed page or may perform an operation of displaying the page next to the currently displayed page automatically.

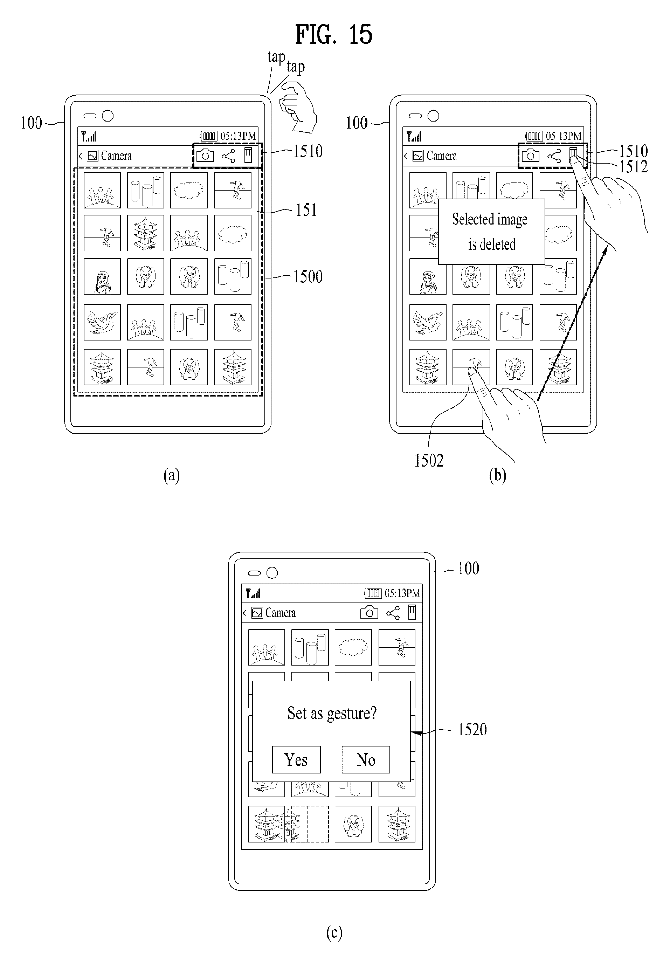

In the following description, a method of setting up a gesture of a user 200 and a control operation related to the gesture of the user 200 is explained in detail with reference to FIG. 15.

FIG. 15 is a diagram for one example of a method for setting a gesture according to one embodiment of the present invention.

Referring to FIG. 15 (a), a plurality of objects 1500 and a menu 1510 for controlling the objects may be displayed on the display unit 151. And, the sensing unit may receive a gesture performed by the user 200 in a manner of tapping the body of the mobile terminal 100.

For instance, the user 200 may tap the body of the mobile terminal 100 two times consecutively while watching the objects displayed on the display unit 151.

Referring to FIG. 15 (b), the controller 180 may perform a prescribed operation in response to an input of the user 200.

For instance, the controller 180 may receive an input of the user 200 for selecting one 1502 of the objects 1500 displayed on the display unit 151. If the user 200 selects an object 1512 for deleting the selected object 1502, the controller 180 may be able to delete an image file related to the corresponding object 1512 from the memory 160. And, the controller 180 may not further display the object corresponding to the deleted file.

Referring to FIG. 15 (c), after the gesture of tapping the body of the mobile terminal 100 two times consecutively has been performed, if the control of selecting the object 1502 and then deleting the selected object 1502 is repeatedly performed, the controller 180 may display a window 1520 for querying whether to save the gesture of tapping the body two times consecutively and the operation of deleting the object 1502 in the memory 160 in a manner of relating the gesture and the operation to each other.

In particular, if a gesture is detected and a prescribed operation is performed, repeatedly, the controller 180 may control the detected gesture and the prescribed operation to be saved in a manner of being related to each other. And, the controller 180 may control a list of the saved gestures and prescribed operations related to each other to be displayed on the display unit 151.

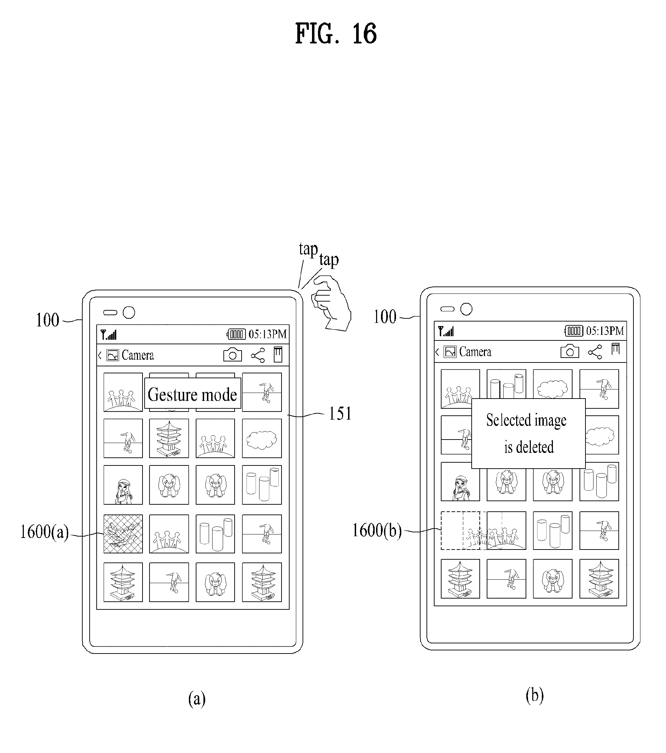

In more particular, the mobile terminal 100 displays the list of the newly saved gestures and prescribed operations. If the user 200 inputs the newly saved gesture, the controller 180 may be able to perform the prescribed operation related to the inputted gesture. This is described in detail with reference to FIG. 16 as follows.

FIG. 16 is a diagram for one example of a method for performing a prescribed operation in a gesture mode of a mobile terminal 100 after a gesture has been saved in association with the prescribed operation according to one embodiment of the present invention.

Referring to FIG. 16 (a), as an object displayed on the display unit 151 is selected by the eyes of the user 200, the mobile terminal 100 enters a gesture mode. In doing so, the controller 180 may control an indicator, which indicates that the mobile terminal 100 is in the gesture mode, to be displayed on an indicator region.

Once the gesture mode is entered, the controller 180 may display a newly saved gesture and a list (not shown in the drawing) of prescribed operations together.

While the mobile terminal 100 is in the gesture mode, the mobile terminal 100 may receive an input of a gesture of tapping the body of the mobile terminal 100 two times consecutively from the user 200. If so, referring to FIG. 16 (b), the controller 180 may be able to perform a control of deleting the selected object.

In particular, the gesture of tapping the body of the mobile terminal 100 two times consecutively and the operation of deleting the object 1600 (a) are saved together in a manner of being related to each other. In doing so, after the object 1600 (a) has been selected by the recognition of the eyes of the user 200, when the gesture mode of detecting the gesture is active, if the gesture of tapping the body of the mobile terminal 100 two times consecutively is received, the controller 180 performs the operation of deleting the selected object 1600 (a).

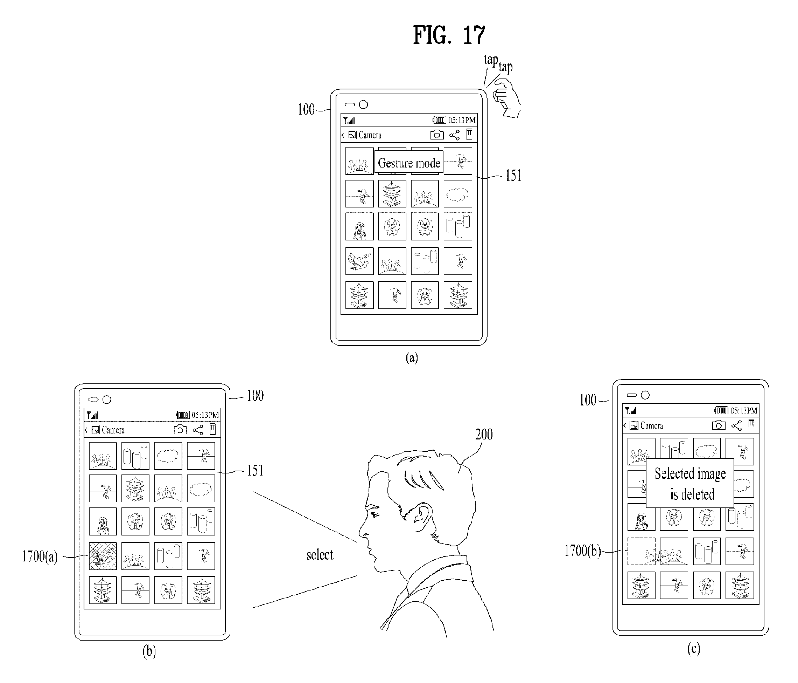

Meanwhile, after a gesture of the user 200 has been performed, if the mobile terminal 100 enters a gesture mode, an operation related to the gesture may be performed. This is described in detail with reference to FIG. 17 as follows.

FIG. 17 is a diagram for one example of a method for performing an operation in a gesture mode entered after performing a gesture according to one embodiment of the present invention.

Referring to FIG. 17 (a), while the mobile terminal 100 does not enter a gesture mode, a gesture of the user 200 may be received.

For instance, while a plurality of objects are displayed on the display unit 151, the controller 180 may receive a gesture of tapping the body of the mobile terminal 100 two times consecutively from the user 200.

Referring to FIG. 17 (b), after an object 1700 (a) has been selected by a recognition of the eyes of the user 200, the mobile terminal 100 may be able to enter the gesture mode.

After the gesture mode has been entered, referring to FIG. 17 (c), the controller 180 may be able to perform a control of deleting the selected object 1700 (a).

In particular, if a gesture is received before a target for performing a control thereon is selected, the controller 180 may be able to perform a control related to the received gesture on the object 1700 (a) selected after reception of the gesture.

Accordingly, the present invention provides the following effects and/or advantages.

First of all, the present invention facilitates the control of the mobile terminal using user's eyes and gesture.

Secondly, the present invention minimizes user's touch inputs for manipulating the mobile terminal.

Effects obtainable from the present invention may be non-limited by the above mentioned effect. And, other unmentioned effects can be clearly understood from the following description by those having ordinary skill in the technical field to which the present invention pertains.

It will be appreciated by those skilled in the art that the present invention can be specified into other form(s) without departing from the spirit or scope of the inventions.

In addition, the above-described methods can be implemented in a program recorded medium as computer-readable codes. The computer-readable media may include all kinds of recording devices in which data readable by a computer system are stored. The computer-readable media may include ROM, RAM, CD-ROM, magnetic tapes, floppy discs, optical data storage devices, and the like for example and also include carrier-wave type implementations (e.g., transmission via Internet). Further, the computer may include the controller 180 of the terminal.

It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal comprising:
a camera configured to recognize a gesture;
a microphone configured to recognize a voice;
a display unit configured to display a first object; and
a controller configured to determine a first location on the display unit that is faced by a user's eyes and to perform a first function on the first object displayed at the first location in response to at least the voice recognized via the microphone or the gesture recognized via the camera.

2. The mobile terminal of claim 1, wherein the controller is further configured to control the display unit to display the first object in a visually identifiable manner during a time that the user's eyes are maintained on the first object.

3. The mobile terminal of claim 1, wherein:
a plurality of objects are displayed at the first location; and
the controller is further configured to control the display unit to display the plurality of objects such that they are visually identifiable from each other.

4. The mobile terminal of claim 3, wherein the controller is further configured to select one of the plurality of objects as the first object in response to the voice recognized via the microphone.

5. The mobile terminal of claim 1, wherein the controller is further configured to control the display unit to display an indicator corresponding to the first function, the indicator indicating that the first function is performed on the first object.

6. The mobile terminal of claim 1, further comprising:
a memory configured to store information,
wherein the controller is further configured to:
perform a second function on the first object in response to at least a new voice recognized via the microphone or a new gesture recognized via the camera; and
control the memory to store a history of functions and corresponding voice and gesture inputs such that they are related to each other.

7. The mobile terminal of claim 6, wherein the controller is further configured to control the display unit to display the stored history of functions and corresponding voice and gesture inputs.

8. The mobile terminal of claim 1, wherein the controller is further configured to:
determine a second location on the display unit that is faced by the user's eyes, wherein a second object is displayed at the second determined location; and
perform a second function on both the first object and the second object.

9. A method of controlling a mobile terminal, the method comprising:
determining a first location on a display unit that is faced by a user's eyes;
determining a first object displayed at the first location; and
performing a first function on the first object in response to at least a recognized voice input or a recognized gesture input.

10. The method of claim 9, further comprising:
displaying a plurality of objects at the first location, wherein the plurality of objects are visually identifiable from each other.

11. The method of claim 10, further comprising:
receiving an input via the microphone to select one of the plurality of objects as the first object.

12. The method of claim 9, further comprising:
displaying an indicator on the display unit that indicates that the first function is performed on the first object.

13. The method of claim 9 further comprising:
recognizing at least a new voice input or a new gesture input;
performing a second function corresponding to the at least new voice input or the new gesture input; and
storing the second function and either the at least new voice input or the new gesture input corresponding to the second function such that they are related to each other.

14. The method of claim 13, further comprising:
displaying a history of stored functions and corresponding voice and gesture inputs.

15. The method of claim 9, further comprising:
determining a second location on the display unit faced by the user's eyes;
determining a second object corresponding to the second location; and
performing a second function on the first object and the second object.
